# EUROPEAN PATENT SPECIFICATION

(11) **EP 4 478 291 B1**
(45) Date of publication and mention of the grant of the patent: **10.12.2025**
(21) Application number: 23179223.5
(22) Date of filing: 14.06.2023
(51) Int. Cl.: G06T 7/90, G06T 7/215

(54) **METHOD FOR DETERMINING A COLOUR OF A TRACKED OBJECT**
VERFAHREN ZUM BESTIMMEN EINER FARBE EINES VERFOLGTEN OBJEKTS
PROCÉDÉ DE DÉTERMINATION D'UNE COULEUR D'UN OBJET SUIVI

(43) Date of publication of application: 18.12.2024
(73) Proprietor: Axis AB, 223 69 Lund (SE)
(72) Inventor: Chen, Jiandan, 223 69 LUND (SE); Sternby, Johan, 223 69 LUND (SE); Sjöbom, Joel, 223 69 LUND (SE); Bergengrip, Ruben, 223 69 LUND (SE); Joki, Max, 223 69 LUND (SE)
(74) Representative: AWA Sweden AB

(56) References cited:
- CN-B- 107 292 933
- US-A1- 2007 154 088
- THIERRY BOUWMANS ET AL: "On the Role and the Importance of Features for Background Modeling and Foreground Detection", ARXIV.ORG, CORNELL UNIVERSITY LIBRARY, 201 OLIN LIBRARY CORNELL UNIVERSITY ITHACA, NY 14853, 28 November 2016 (2016-11-28), XP080735023, DOI: 10.1016/J.COSREV.2018.01.004

## Description

### Technical Field

The present invention relates to determining a colour of a tracked object in a video sequence depicting a scene, and in particular to determining a colour of a tracked object in a video sequence depicting a scene with varying lighting conditions.

### Background

Colour cast refers to an overall tint of a particular colour that pervades an image, usually a result of specific lighting conditions. Uneven colour cast, a variant of this phenomenon, refers to different tints appearing in different areas of an image. This can transpire when diverse light sources with disparate colour temperatures illuminate different aspects of the scene. For instance, in an outdoor setting, daylight and street lighting may coexist, producing mixed lighting conditions. Daylight could cast a cooler, bluer light on certain parts of the scene, while street lighting might impose a warmer, yellowish light on others. In addition to this, shadows can also introduce localized colour casts. The colour of light in shadows often differs from the direct light, contributing to an uneven colour cast.

An example of an application where uneven colour cast is important to handle is in monitoring systems, particularly when an operator examines video sequences to locate objects of a specific colour. Manually sifting through multiple video sequences to identify items of interest can be both tedious and time-consuming. To mitigate this issue, automated video analytics tools are generally employed to analyse the video sequences. These tools can detect objects in the sequences and annotate the detected objects with attributes such as object type, size, and velocity. These features can then be utilized by the operator when searching for a specific object of interest, for example in a forensic search application. An important feature when searching for an object in an image or video sequence is the colour of the object. However, the apparent colour of an object will be influenced by surrounding light sources, such as natural light sources and artificial light sources, which may result in a faulty impression of the colour of the object in the image. An example of this is a white car under a yellow streetlight, which may result in that the colour of the car in an image capturing that scene is yellow rather than white.

A further problem is that lighting conditions in a scene vary based on many different reasons, such as placement of active artificial light sources, time of day, time of year, weather conditions, buildings, vegetation, etc. This makes it difficult to accurately determine an actual or natural colour of an object captured in an image which in turn may negatively influence the possibility to search for an object based on the colour of the object.

US 2007/154088 discusses colour identification in digital images with the objective to determine the robust perceptual colour or true colour of an object, defined as the object's colour perceived under some standard viewing, lighting and sensing conditions.

CN 107 292 933 describes using a neural network for determining colour.

Thierry Bouwmans et al: "On the role and the importance of features for background modelling and foreground detection", Arxiv.org, Cornell university library, 28 nov 2016, XP080735023 describes modelling and colour variance for the purpose of detection.

There is thus a need for improvements in this context.

### Summary

In view of the above, solving, or at least reducing, one or several of the drawbacks discussed above would be beneficial, as set forth in the attached independent patent claims.

According to a first aspect of the present invention, there is provided a computer implemented method for determining a colour of a tracked object, comprising the steps of: providing a first video sequence depicting a scene, the first video sequence comprising a plurality of image frames; for each image frame of the plurality of image frames, detecting foreground objects in the image frame; for each area of a plurality of areas in the scene, analysing the first video sequence and calculating an object colour probability vector associated with the area of the scene, wherein each value in the object colour probability vector relates to a colour from a set of predefined colours and indicates a probability that a foreground object located in the area of the scene has the colour; for each area of the plurality of areas of the scene, calculating a measurement of variability of the probabilities indicated by the object colour probability vector associated with the area of the scene, and associating the measurement of variability with the area of the scene.

The method further comprises providing a second video sequence depicting the scene; tracking a foreground object in the second video sequence, the tracked foreground object being located in a first area of the plurality of areas in the scene in a first image frame of the second video sequence, and in a second different area of the plurality of areas in the scene in a second image frame of the second video sequence; determining a first set of colours of the tracked foreground object in the first image frame, and determining a second different set of colours of the tracked foreground object in the second image frame; and upon determining that the measurement of variability associated with the first area of the scene is lower than the measurement of variability associated with the second area of the scene, determining that the colour(s) of the tracked foreground object is the first set of colours, and otherwise determining that the colour(s) of the tracked foreground object is the second set of colours.

An "object colour probability vector" is a mathematical representation associated with a specific area of a scene. Each value within this vector corresponds to a colour from a predefined set of colours. The predefined set of colours may for example comprise 8 colours, 12 colours, 16 colours, etc. The granularity of the predefined set of colours typically depends on the application. For example, too many shades of blue in the set may result in a difficulty to specify the actual blue colour when searching for an object, e.g., in a forensic search application, and thus increase the risk of false negatives in the search. On the other hand, too few colours may result in an increase of false positives since all shades of blue that an object can have may fall under the colour "blue". Each value in the object colour probability vector indicates the likelihood or probability that a foreground object located within that specific area of the scene possesses the corresponding colour, i.e., indicates an estimated likelihood that a foreground object in the area of the scene will be of the colour corresponding to that value. It should be noted that each value in the object colour probability vector may directly or indirectly represent the probability. A direct representation may for example comprise a percentage, e.g., 23% probability that an object with the colour "light yellow" will occur in the area of the scene. An indirect representation may for example comprise a count of objects with the corresponding colour that has been detected in the area of the scene, e.g., 15 objects with the colour "dark red" has been detected in the area of the scene. Such indirect representation needs to be compared with the other values in the object colour probability vector to determine the actual probability of an object with the colour "dark red" occurring in the area of the scene, e.g., 15 out of a total of 73 objects detected in the area of the scene has the colour "dark red" resulting in a probability of 20.5%.

The term "measurement of variability" should, in the context of present specification, be interpreted as a statistical term that refers to how spread out a set of data (object colour probability vector) is. It indicates the degree of diversity or dissimilarity in the dataset, providing a sense of how much the numbers in the dataset "vary" from the average (or the centre point) and from each other. If all the numbers in the object colour probability vector (i.e., the probabilities) are close to each other and the average, the variability is low. If the numbers are widely spread out, the variability is high. For example, the measurement of variability for the object colour probability vector comprising the values [0.2, 0.3, 0.3, 0.2] is lower than the measurement of variability for the object colour probability vector comprising the values [0.1, 0.7, 0.1, 0.1]. Specifically, in an area of the scene where objects exhibit a wide variety of colours, the measurement of variability is often lower. This is due to the multitude of colours equally contributing to the probability distribution, reflecting an even representation across the colour spectrum. The measurement is an aggregate based on multiple objects with differing colours. As a result, when the colour variations are vast and balanced, the associated probabilities tend to converge, leading to lower variability since no single colour predominantly influences the overall measure.

As described above, an apparent colour of an object will be influenced by surrounding light sources, such as natural light sources and artificial light sources. For example, if an area of the scene is illuminated by a yellow light, the apparent colour of an object in that area of the scene as captured by an image may shift towards yellow, even though the natural colour of the object is not yellow. In another example, an area of the scene is shadowed by a building. The apparent colour of an object in that area of the scene as captured by an image may shift towards darker colours (e.g., dark red, dark blue, black, etc.) even though the natural colour of the object is not dark. For such areas in the scene, where light sources and/or shadows may skew or influence the apparent colour of object towards a particular shade (colour cast as described above), the measurement of variability will be larger than for areas in the scene with more natural light. For example, if there is a yellow colour cast due to a yellow streetlamp, a white car under the lamp would look yellowish, because the yellow light from the lamp is reflecting off the car. Similarly, a blue car would look more greenish under the yellow light, because the blue of the car combined with the yellow light results in a greenish colour. The probability that a foreground object located in the area of the scene (as captured by an image) is determined to have a yellow or green colour may thus increase while the probability that a foreground object located in the area of the scene is determined to have a white or blue colour may decrease, resulting in an increased measurement of variability for the area of the scene under the yellow street lamp compared to an area of the scene with only natural light.

The inventors have realized that such a measurement of variability may be used to determine a colour (or colours) for a tracked object, in the case that different set of colours (one or more colours) are determined for the object while it moves through the scene. The variability is determined during a configuring (training) phase, by detecting foreground objects in a video sequence (or several video sequences) capturing the scene and using the image data of the video sequence to determine colours of objects located in different areas of the scene.

A lower measurement of variability associated with an area of the scene points to that the colours of objects located in that area may be rendered more accurately in an image capturing the scene compared to an area associated with a higher measurement of variability, as discussed above. The measurement of variability may thus be used as a colour rendering metric associated with a specific area of the scene. The term "colour rendering metric" refers to a quantitative measure of the ability of light source(s) (i.e., the light sources illuminating an area of the scene, possibly influenced by other objects resulting in shadows etc.) to accurately reveal the colours of various objects compared to an ideal or natural light source. A lower measurement of variability results in a higher colour rendering metric, and vice versa.

The variability determined during the configuration phase may thus be used for a further video sequence capturing the scene, to decide an "actual" colour of an object moving through the scene as described herein. Advantageously, a most likely colour (set of colours) for an object may be determined.

In some embodiments, all occurrences of the tracked foreground object in the second video sequence are labelled with the determined colour(s). Advantageously, also images showing the foreground object when being in an area of the scene where the apparent colour is skewed away from its natural colour, as described above, may be flagged when searching for an object of that particular colour in the second video sequence.

In some embodiments, each of the first and second set of colours comprises one of: a single colour value; a plurality of colour values; or a plurality of colour values, each colour value associated with a probability that the tracked object has the colour. For example, the set of colours may be determined using a neural network trained to, based on input pixel data depicting the object, output a plurality of colour values, each colour value associated with a probability that the tracked object has the colour. The plurality of colour values is typically limited to the set of predefined colours. In another example, pixel data depicting the object may be used to calculate the average colour, e.g., adding up all the red, green, and blue values from the RGB pixel data separately, and then dividing by the number of pixels to get the average red, green, and blue values. The resulting RGB value may then be used as the single colour value. In another embodiment, colour quantization or clustering, which groups similar colours together, may be used to determine a plurality of colour values (the most common colours) for the object.

In case the first and second video sequence is captured by a camera with a same field of view in the scene, an area of the scene corresponds to a same pixel region in the image frames of the first and second video sequence. The granularity of the area of the scene depends on the requirements of and limitations of the application. For example, fewer areas of the scene may result in less computational resources being used for implementing the method. On the other hand, increasing the number of areas in the scene may result in a more accurate end result (of the determined colour(s) of the foreground object) since the likelihood of finding an area of the scene with advantageous lighting may increase. In some embodiments, each area of the scene corresponds to a single pixel coordinate in the image frames of the first and second video sequence.

In case the first and second video sequence is captured by a camera with a changing field of view in the scene, the method further comprises the step of: determining a pixel region in an image frame from the first or the second video sequence that corresponds to an area of the scene using camera parameters, the camera parameters comprising one or more of: pan, tilt, roll or zoom. Consequently, the techniques described herein may be used also on video captured by a moving camera.

In some embodiments, the step of detecting foreground objects in the image frame comprises determining a location and an extent of each detected foreground object in the image frame, wherein the location and extent comprises one of: a pixel mask, or a bounding box. The location and extent may be used to map an object to a certain area of the scene. If the bounding box/pixel mask of the object at least partly overlaps more than one area of the scene, the colours of the object may contribute to the object colour probability vectors associated with each of these areas.

In some embodiments, the step of analysing the first video sequence comprises, for each foreground object located in the area of the scene in an image frame of the first video sequence: determining one or more colours of the foreground object from pixel data depicting the foreground object in the image frame; and using the determined one or more colours when calculating the object colour probability vector associated with the area of the scene. For example, pixel data depicting the object may be used to calculate the average colour, e.g., adding up all the red, green, and blue values from the RGB pixel data separately (or similarly for other colour spaces such as HSV, CIE), and then dividing by the number of pixels to get the average red, green, and blue values. The resulting RGB value may then be used as the single colour value. In another embodiment, colour quantization or clustering techniques, which groups similar colours together, may be used to determine a plurality of colour values (the most common colours) for the object. The one or more colours determined for the foreground object may all be part of the set of predefined colours. Colour quantization techniques may be used to map a colour of the object to one of the predefined colours. The object colour probability vector associated with the area of the scene may then be updated using the determined one or more colours of the foreground object, for example by updating an object count for each of the one or more colours, or by recalculating probabilities based on of the one or more colours.

In examples, the step of analysing the first video sequence comprises, for each foreground object located in the area of the scene in an image frame of the first video sequence: receiving a plurality of colour values, each colour value associated with a probability that the foreground object has the colour in the image frame; and using the plurality of colour values and their associated probabilities when calculating the object colour probability vector associated with the area of the scene. The plurality colour values may be received from a neural network trained to, based on input pixel data depicting the foreground object, output a plurality of colour values, each colour value associated with a probability that the tracked object has the colour. The plurality of colour values is typically limited to the set of predefined colours. The object colour probability vector associated with the area of the scene may then be updated using the colour values and their respective associated probability.

In some examples, wherein the step of calculating an object colour probability vector for an area of the plurality of areas in the scene comprises detecting at least a threshold number of foreground objects in the area of the scene. In some embodiments, at least the threshold number of each foreground object class of a plurality of foreground object classes needs to be detected. Consequently, a sufficient number of objects located in an area of the scene may be analysed to determine a representative object colour probability vector for the area of the scene. The threshold number depends on the requirements of the application as well as the scene captured by the video sequences. For example, the threshold number may be 50, 100, 130, 210, 450, etc.

In embodiments, the first video sequence is captured during a first time period of a day, wherein the second video sequence is captured during a second time period of a subsequent day, wherein the second time period is entirely encompassed within the first time period. Advantageously, the lighting conditions of the configuration/traning phase of the object colour probability vectors may sufficiently well conform to the lighting conditions when the object colour probability vectors are used. The techniques described herein may advantageously be used for video captured during daylight hours since this increases the possibility that at least some of the areas of the scene is illuminated such that the true colour of an object is captured by an image. Consequently, in some embodiments, the first video sequence (and the second video sequence) is captured during daylight hours.

In some examples, the measurement of variability is at least one of: variance, standard deviation, mean absolute deviation, median absolute deviation or coefficient of variations.

According to a second aspect of the invention, the above object is achieved by a non-transitory computer-readable storage medium having stored thereon instructions for implementing the method according to the first aspect when executed on a device having processing capabilities.

According to a third aspect of the invention, the above object is achieved by a system comprising: one or more processors; and one or more non-transitory computer-readable media storing first computer executable instructions that, when executed by the one or more processors, cause the system to perform actions as detailed in the appended claims.

According to a fourth aspect of the invention, the above object is achieved by a system comprising a colour matching system and a forensic search application, as detailed in the appended claims.

Advantageously, a forensic search application may then be used for searching for an object, wherein a search request comprising a first colour value. The first colour value can be compared to the colour(s) determined for a tracked foreground object and if it is determined that the first colour value matches a colour determined for the foreground object using the techniques described herein, a search response may be returned based at least in part on the tracked foreground object. The details of the actual search response may be based on the requirements of the forensic search application. For example, a search response may include the image where the object having a colour matching the colour value of the search request was found, or a time span of a video stream where the object is detected, or a time stamp where the object is detected, a license plate of the object, a face of the object, etc.

The second, third and fourth aspects may generally have the same features and advantages as the first aspect. It is further noted that the disclosure relates to all possible combinations of features unless explicitly stated otherwise.

### Brief Description of the Drawings

Figure 1 shows a scene in which light sources and other objects may result in an uneven colour cast in images capturing the scene;
Figure 2 shows a system for calculation of measurements of variability for areas of the scene in figure 1, according to embodiments;
Figure 3 shows a system for using the measurements of variability from figure 2 to determine colour(s) of a tracked foreground object, according to embodiments;
Figure 4 shows a system comprising a colour matching system according to figure 2-3 and a forensic search application, according to embodiments;
Figure 5 shows a flow chart of a method for determining a colour of a tracked object, according to embodiments.

### Detailed Description

A colour of an object in an image may be determined by the material and surface properties of the object, which determine the amount of light absorbed and reflected by the object and therefore its perceived colour. The colour of the object in the image may further be influenced by the camera settings (white balance, colour profile, etc.) and image post processing. These properties may typically be controllable by the owner of the camera. Properties that may be difficult to control are light sources and lighting conditions when capturing the image or video, in particular in a monitoring situation where the camera is continuously capturing a scene. Light sources and lighting conditions may have a big influence on the detected (apparent, perceived, etc.) colour of an object in the image of a scene, which in turn means that the colour may be perceived differently depending on time of day, time of year, weather conditions, etc., as well as depending on where in the scene an object is located when capturing the image. This may cause problems when searching for an object, e.g., in a forensic search application, based on a colour of the object, or in other applications where it is important to know the colour of an object.

The present disclosure aims to provide methods, systems, and softwares for determining a colour of a tracked object in a video sequence of a scene, when lighting in the scene is uneven. Uneven lighting may, as described herein, cause uneven colour cast in an image depicting the scene, resulting in different parts of the image having different tints.

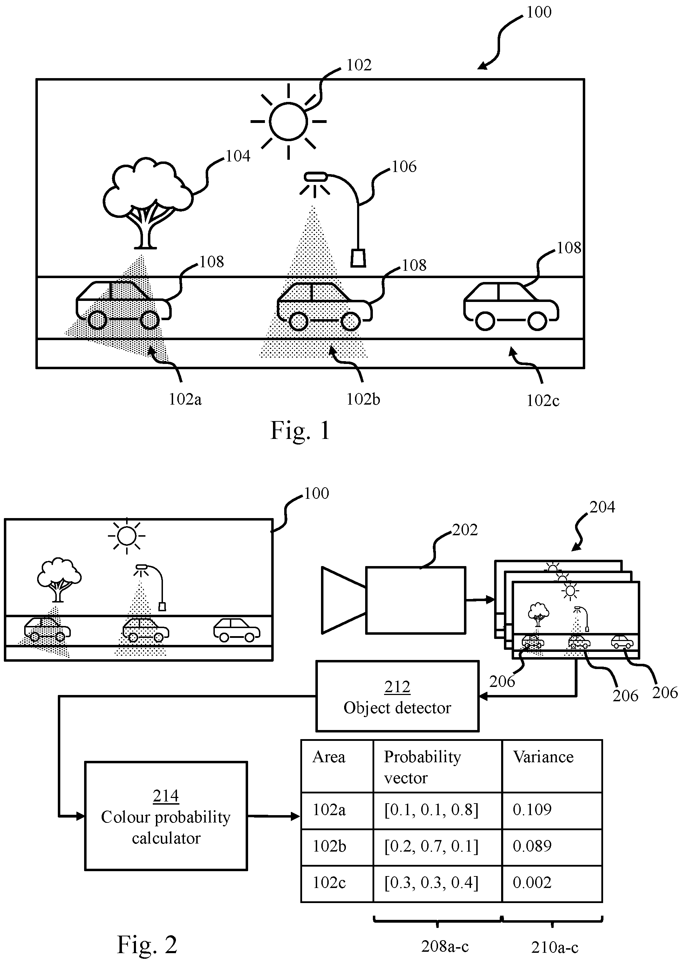

Figure 1 shows a scenario with a scene 100 comprising uneven lighting. The scene 100 includes a road for vehicles 108. The scene 100 thus comprises objects 108 moving through the scene 100. The scene 100 further comprises both natural lighting from the sun 102 and the sky, as well as artificial lighting from a streetlamp 106. The scene also includes a tree 104, which casts a shadow over a portion of the scene 100. The depicted scene 100 can thus be divided into at least three areas 102a-c, each distinguished by unique lighting conditions. The first area 102a is shaded by the tree. The second area 102b is lit by the streetlamp 106. Finally, the third area 102c is exposed to direct sunlight from both the sun 102 and the diffused light from the sky.

It should be noted that the scene depicted in figure 1 is simplified for ease of description and that in reality, a scene typically comprises more objects and/or light sources which influence the lighting conditions of different areas of the scene.

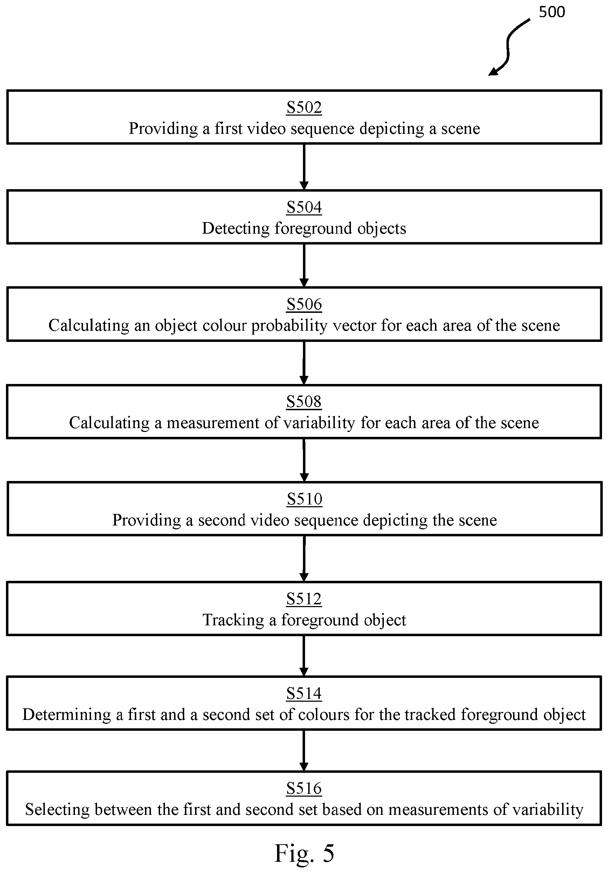

The vehicles 108 moving on the road may be utilized to determine which area of the scene 100 that results in the most accurate colours of objects (located in the area), when depicted by an image/video stream capturing the scene 100. The process of calculating a colour rendering metric for an area of a scene will now be explained in conjunction with figure 2 and figure 5.

Figure 5 shows a flow chart of a method 500 of determining a colour of a tracked object. The method comprises a training/configuration phase S502-S508 and an implementation phase S510-S516. The training phase will now be described in conjunction with figure 2.

Figure 2 shows a camera 202 capturing the scene from figure 1, and thus providing S502 a video sequence 204 depicting the scene 100.

The image frames of the video sequence 204 each comprises background objects (a background) and foreground objects 206. The foreground objects 206 are, in this simplified example, the vehicles 108 moving in the scene.

An object detector 212 is used to, for each image frame of the plurality of image frames of the video sequence 204, detect S504 the foreground objects 206 in the image frame. Any suitable type of object detector may be used, both neural networks-based techniques and non-neural network-based techniques. Neural network-based techniques include using convolutional neural networks using models such as YOLO (You Only Look Once), SSD (Single Shot MultiBox Detector), DETR (End-to-end detection with transformers), and Faster R-CNN (Region-based Convolutional Neural Networks). Other neural network-based techniques include LSTM (Long Short Term Memory) and GRU (Gated Recurrent Unit) networks. Non neural network-based techniques include Histogram of Oriented Gradients (HOG), Scale-Invariant Feature Transform (SIFT) and Speeded Up Robust Features (SURF).

The detected foreground objects 206 are sent to a Colour probability calculator 214. The Colour probability calculator 214 may be configured to divide the scene into areas of the scene, or to receive data indicating the areas of the scene.

In the case of a fixed camera 202 capturing the scene 100, each area of the scene corresponds to a same pixel region in the image frames of the video sequence 204. For example, each area of the scene may correspond to a 10*10 pixel region of the image frames of the video sequence, or a 20*20 pixel region, or a 30*20 pixel region or any suitable sized pixel region. In some embodiments, each area of the scene corresponds to a single pixel coordinate in the image frames of the video sequence 204. The areas of the scene may in some embodiments be determined based on an analysis of the lighting conditions of the scene. In other embodiments, the areas of the scene may be determined based on a semantic segmentation of the background of the scene.

In case (not shown in figure 2), the video sequence is captured by a camera with a changing field of view in the scene, a pixel region in an image frame from the video sequence that corresponds to an area of the scene is determined using camera parameters, the camera parameters comprising one or more of: pan, tilt, roll or zoom.

In the simplified example of figure 2, the scene is captured by a fixed camera and is divided into three areas of the scene 102a, 102b, 102c, according to the above description of figure 1.

For each area of the scene, the Colour probability calculator may calculate S506 an object colour probability vector 208a-c associated with the area of the scene 102a-c. Each value in the object colour probability vector 208a-c relates to a colour from a set of predefined colours and indicates a probability that a foreground object 206 located in the area of the scene 102a-c has the colour.

The predefined colours may be configured based on the requirements of the system described herein. For example, the predefined colours may comprise 10-25 different colours, or 5-10 colours. An increase in the number of colours may require a prolonged training phase of the system and techniques described herein. This is because a threshold number of foreground objects detected in a particular area of the scene in order to calculate a representative object colour probability vector 208a-c may correlate with the number of predefined colours. On the other hand, the accuracy of determining a most suitable area of the scene for colour determination (as will be described further below) may increase if the number of predefined colours increase. Accordingly, in some embodiments, calculating an object colour probability vector 208a-c for an area of the plurality of areas 102a-c in the scene 100 comprises detecting at least a threshold number of foreground objects 206 in the area of the scene. The threshold number may depend on the number of predefined colours, the number of moving objects 108 that typically is located in the scene 100 per time interval, the variability of the colours of such objects 108, etc.

The determining of the colour(s) of the foreground objects 206 in the video sequence may be implemented with any suitable colour determining algorithm. In some embodiments, the step of analysing the first video sequence comprises, for each foreground object located in the area of the scene in an image frame of the first video sequence: determining one or more colours of the foreground object from pixel data of the foreground object in the image frame; and using the determined one or more colours when calculating the object colour probability vector associated with the area of the scene. The pixel data to use for a particular foreground object 206 may be determined by the object detector 212, which may determine a location and an extent of each detected foreground object 206 in each the image frame, wherein the location and extent comprises one of: a pixel mask, or a bounding box. Such pixel data may thus be analysed to determine one or more colours of the pixel data. For example, a histogram of colours may be determined and mapped to the predetermined colours. The predetermined colour that has most pixels in the pixel data with the same colour or similar colour may be chosen as the colour of the object. In some cases, more than one colour is determined for an object, for example the most common colours in the pixel data. Mapping of the colours of the pixel data to the predetermined colours may involve comparing a colour of the pixel data with each of the colours among the predetermined colours to choose the "closest" one. The definition of closest may vary based on the colour space, but generally, calculating a Euclidian distance between the colour to map and each of the predetermined colours may suffice. If enough pixels (e.g., above a certain percentage threshold) are similar enough (e.g., distance below a distance threshold), the object may be determined to have the relevant predetermined colour. The determined colours for an object located in an area of the scene may get a "tick" (an increase of the value/count) in the object colour probability vector (associated with the area of the scene in which the object is located) for that colour. After the training phase, an object colour probability vector for a certain area of the scene may look like this (5 predetermined colours, black, white, blue, red, green): [46, 120, 66, 40, 23], which may be converted to probabilities: [0.16, 0.41, 0.22, 0,13, 0.08]. For another area of the scene, the numbers may be different based on the illumination conditions as described above.

In other embodiments, a neural network may be used to determine a colour of an object. For example, the neural network may be trained to determine a probability of an object having a certain colour. The training may involve using training data, each training data comprising a set of pixels, which are labelled with one or more of the predetermined colours. The neural network may use this training data to learn how to identify the correct colours (among the predetermined colours) for a particular set of pixels. The output from using the neural network may be a plurality of colour values, each colour value associated with a probability that the foreground object has the colour in the image frame. For example, an output for a dark blue object may result in the following probabilities (for 5 predetermined colours, black, white, blue, red, green): [0.30, 0.01, 0.6, 0.05, 0.04]. Such vector may be used to add on to, or recalculate, the values of the object probability vector 208a-c. For example, the object probability vector 208a-c may be normalized to always have a total value of one (100%) of the sum all the individual values in the vector. In some embodiments, the colours among the predetermined colours that have a probability in the output from the neural network above a threshold probability for a certain input object may get a "tick" (an increase of the value/count) in the object colour probability vector for that colour/colours, as described above.

In some embodiments, an object is located in more than one area of the scene at the same time, for example when the size of the object is greater than the size of areas of the scene. In such cases, a determined colour(s) of the object in an image frame of the video sequence may influence more than one object probability vector. For example, as mentioned above, the step of detecting foreground objects in the image frame comprises determining a location and an extent of each detected foreground object in the image frame, wherein the location and extent comprises one of: a pixel mask, or a bounding box. In such examples, all areas of the scene at least partly overlapped by the pixel mask/bounding box of an object detected in an image frame may be influenced by the colours determined for that object.

In the example of figure 2, the number of predetermined colours is three (3). The object probability vector 208a for the area 102a (which is shadowed by a tree 104 in the scene 100) is determined to be [0.1, 0.1, 0.8]. The object probability vector 208b for the area 102b (which is illuminated by a streetlight 108 in the scene 100) is determined to be [0.2, 0.7, 0.1]. The object probability vector 208c for the area 102c (which is exposed to direct sunlight from both the sun 102 and the diffused light from the sky in the scene 100) is determined to be [0.3, 0.3, 0.4].

The colour probability calculator 214 is further configured to calculate S508 a measurement of variability 210a-c of the probabilities indicated by the object colour probability vector associated with the area of the scene. As described above, the measurement of variability may be used as a colour rendering metric, e.g., a quantitative measure of the ability of light source(s) in an area of the scene (i.e., the light sources illuminating an area of the scene, possibly influenced by other objects resulting in shadows etc.) to accurately reveal the colours of various objects compared to an ideal or natural light source.

In figure 2, the measurement of variability 210a-c is calculated using the variance of the respective object probability vectors 208a-c. In other embodiments, other measurements may be used such as standard deviation, mean absolute deviation, median absolute deviation or coefficient of variations. In any event, a measurement of variability of an area of the scene that is lower (less variability among the probabilities of objects having the respective predetermined colours) indicates an area of the scene with a suitable illumination for determining a "true" colour of an object, since a low variability indicates that image data capturing the scene at that area of the scene is not tinted in way that skews the colour distribution of the objects captured at that area of the scene.

In figure 2, the variance 210a of the shadowed area 102a is 0.109, the variance 210b of the streetlight illuminated area 102b is 0.089 while the variance 210c of the area of the scene 102c illuminated with natural light is 0.002. The third area of the scene 102c may thus be the most suitable (among the three areas 102a-c) for determining a "true" colour of an object.

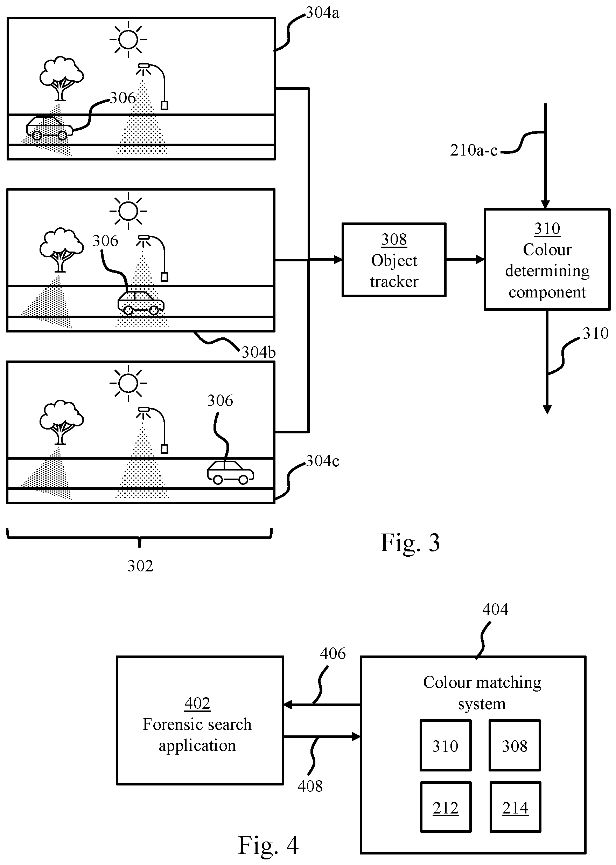

Figure 3 shows how the metrics calculated in figure 2 is used for a second video sequence 302 depicting the scene 100 from figure 1. The usage of the metrics will now be described in conjunction with the implementation phase S510-S516 of the method 500 shown in figure 5.

The second video sequence 302 depicting the scene 100 is provided S510. In figure 3, the second video sequence 302 comprises three image frames 304a-c. The image frames 304a-c depict a foreground object 306 moving in the scene. The image frames 304a-c is inputted to an object tracker 308 for tracking the detected foreground objects. There are several techniques used for tracking objects in video sequences, ranging from classic computer vision techniques to modern deep learning approaches, for example using Optical Flow, Kalman filtering, Particle filters, Correlation filters, or Deep SORT (Simple Online and Realtime Tracking with a Deep Association Metric) algorithm, which uses a CNN to extract features and a Kalman filter to predict motion, etc.

The foreground object 306 may be tracked S512 in the second video sequence 302 by the object tracker 308. The tracked foreground object 306 is located in a first area 102a of the plurality of areas 102a-c in the scene in the first image frame 304a of the second video sequence, in a second different area 102b of the plurality of areas in the scene in the second image frame 304b, and in third different area 102c of the plurality of areas in scene in the third image frame 304c.

The system of figure 3 further comprises a Colour determining component 310 which may be used to determine colour(s) of the tracked object 306. The measurements of variability 210a-c for each area 102a-c of the scene calculated in figure 2 may be input to the Colour determining component 310. The Colour determining component 310 may be configured to determine S512 a first set of colours of the tracked foreground object 306 in the first image frame 304a-c (when located in the first area of the scene 102a), a second different set of colours of the tracked foreground object 306 in the second image frame 304b (when located in the second area of the scene 102b), and a third different set of colours of the tracked foreground object 306 in the third image frame 304c (when located in the third area of the scene 102c). The different sets of colours may be determined as described above. As such, the sets of colours may comprise one of: a single colour value; a plurality of colour values; or a plurality of colour values, each colour value associated with a probability that the tracked object has the colour.

Using the measurements of variability 210a-c, the Colour determining component 310 may select S516 among the sets of colours. More specifically, the Colour determining component 310 may select the set of colours that is determined for the object when it is in the area of the scene with the comparably lower measurement of variability. The Colour determining component 310 may thus determine that the colour(s) 310 of the tracked object 306 is the set of colours that is determined for the object 306 when it is in the area of the scene with the comparably lower measurement of variability. In this case, the colour(s) 310 of the tracked object 306 is determined to be the set of colours determined for the object 306 in the third image frame 304c, i.e., the third set of colours.

In some embodiments, the Colour determining component 310 may be configured to label all occurrences of the tracked foreground object 306 in the second video sequence 302 with the determined colour(s) 310. This may be particularly advantageous in a system comprising a Colour matching system 404 (as described in conjunction with figures 2-3 above) and a Forensic search application 402. The Colour matching system 404 may comprise the components 212, 214, 308, 310 discussed above and may be configured to implement the functionality of determining colour(s) of a tracked object in a second video sequence (as described above in conjunction with figure 3) based on measurements of variability of areas in the scene as determined using detected objects in a first video sequence (as described above in conjunction with figure 2). The Colour matching system 404 may further be configured to receiving a search request 408 comprising a first colour value, determining that the first colour value matches a colour determined for the foreground object; and returning a search response 406 based at least in part on the foreground object.

The Forensic search application 402 may be configured to provide the search request 408 comprising the first colour value to the Colour matching system 404, receive a search response 406 from the Colour matching system 404; and display data from the search response to a user.

The Colour matching system 404 may in examples be implemented in a single device such as a camera. In other examples, some or all of the different components (modules, units, etc.,) 212, 214, 308, 310 may be implemented in a server or in the cloud. Generally, the device (camera, server, etc.,) implementing the components 212, 214, 308, 310 may comprise circuitry which is configured to implement the components 212, 214, 308, 310 and, more specifically, their functionality. The described features in the Colour matching system 404 and the Forensic search application 402 can be implemented advantageously in one or more computer programs that are executable on a programmable system including at least one programmable processor coupled to receive data and instructions from, and to transmit data and instructions to, a data storage system, at least one input device such as a camera, and in some cases at least one output device such as a display. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. For example, the training phase may relate to a particular time span of day, a particular time of the year, a particular weather situation etc. The measurement of variabilities determined for different time periods/weather, etc., may be stored and implemented when a similar time period/weather conditions occur, e.g., in the Colour determining component 310 of figure 3. In some embodiments, the measurement of variabilities of areas of the scene are reset or recalibrated on a regular basis.

It is to be understood that any feature described in relation to any one embodiment may be used alone, or in combination with other features described, and may also be used in combination with one or more features of any other of the embodiments, or any combination of any other of the embodiments. The invention is defined by the appended claims.

## Claims

1. A computer implemented method (500) for determining a colour of a tracked object, comprising the steps of:
providing (S502) a first video sequence (204) depicting a scene (100), the first video sequence comprising a plurality of image frames;
for each image frame of the plurality of image frames, detecting (S504) foreground objects (206) in the image frame;
for each area of a plurality of areas (102a-c) in the scene, analysing the first video sequence and calculating (S506) an object colour probability vector (208a-c) associated with the area of the scene, wherein each value in the object colour probability vector relates to a colour from a set of predefined colours and indicates a probability that a foreground object located in the area of the scene has the colour;
for each area of the plurality of areas of the scene, calculating (S508) a measurement of variability (210a-c) of the probabilities indicated by the object colour probability vector associated with the area of the scene, and associating the measurement of variability with the area of the scene;
providing (S510) a second video sequence (302) depicting the scene;
tracking (S512) a foreground object (306) in the second video sequence, the tracked foreground object being located in a first area of the plurality of areas in the scene in a first image frame (304a) of the second video sequence, and in a second different area of the plurality of areas in the scene in a second image frame (304b) of the second video sequence;
determining (S514) a first set of colours of the tracked foreground object in the first image frame, and determining (S514) a second different set of colours of the tracked foreground object in the second image frame; and
upon determining that the measurement of variability associated with the first area of the scene is lower than the measurement of variability associated with the second area of the scene, determining (S516) that the colour(s) (310) of the tracked foreground object is the first set of colours, and otherwise determining (S516) that the colour(s) of the tracked foreground object is the second set of colours,
wherein the first and second video sequence is captured by a camera with a same field of view in the scene, wherein an area of the scene corresponds to a same pixel region in the image frames of the first and second video sequence,
or
wherein the first and second video sequence is captured by a camera with a changing field of view in the scene, wherein the method further comprises the step of:
determining a pixel region in an image frame from the first or the second video sequence that corresponds to an area of the scene using camera parameters, the camera parameters comprising one or more of: pan, tilt, roll or zoom.

2. The method of claim 1, further comprising the steps of:
labelling all occurrences of the tracked foreground object in the second video sequence with the determined colour(s).

3. The method of any one of claims 1-2, wherein each of the first and second set of colours comprises one of:
a single colour value;
a plurality of colour values; or
a plurality of colour values, each colour value associated with a probability that the tracked object has the colour.

4. The method of any of claims 1-3, wherein each area of the scene corresponds to a single pixel coordinate in the image frames of the first and second video sequence.

5. The method of any one of claims 1-4, wherein the step of detecting foreground objects in the image frame comprises:
determining a location and an extent of each detected foreground object in the image frame, wherein the location and extent comprises one of:
a pixel mask, or a bounding box.

6. The method of any one of claims 1-5, wherein the step of analysing the first video sequence comprises, for each foreground object located in the area of the scene in an image frame of the first video sequence:
determining one or more colours of the foreground object from pixel data depicting the foreground object in the image frame; and
using the determined one or more colours when calculating the object colour probability vector associated with the area of the scene.

7. The method of any one of claims 1-5, wherein the step of analysing the first video sequence comprises, for each foreground object located in the area of the scene in an image frame of the first video sequence:
receiving a plurality of colour values, each colour value associated with a probability that the foreground object has the colour in the image frame; and
using the plurality of colour values and their associated probabilities when calculating the object colour probability vector associated with the area of the scene.

8. The method of any one of claims 1-7, wherein the step of calculating an object colour probability vector for an area of the plurality of areas in the scene comprises detecting at least a threshold number of foreground objects in the area of the scene.

9. The method of any one of claim 1-8, wherein the first video sequence is captured during a first time period of a day, wherein the second video sequence is captured during a second time period of a subsequent day, wherein the second time period is entirely encompassed within the first time period.

10. The method of claim of claim 9, wherein the measurement of variability is at least one of:
variance, standard deviation, mean absolute deviation, median absolute deviation or coefficient of variations.

11. A non-transitory computer-readable storage medium comprising instructions which, when executed by a computer, cause the computer to carry out the method of claims 1-10.

12. A data processing system comprising:
one or more processors; and
one or more non-transitory computer-readable media storing first computer executable instructions that, when executed by the one or more processors, cause the system to perform actions comprising:
providing a first video sequence depicting a scene, the first video sequence comprising a plurality of image frames;
for each image frame of the plurality of image frames, detecting foreground objects in the image frame;
for each area of a plurality of areas in the scene, analysing the first video sequence and calculating an object colour probability vector associated with the area of the scene, wherein each value in the object colour probability vector relates to a colour from a set of predefined colours and indicates a probability that a foreground object located in the area of the scene has the colour;
for each area of the plurality of areas of the scene, calculating a measurement of variability of the probabilities indicated by the object colour probability vector associated with the area of the scene, and associating the measurement of variability with the area of the scene;
providing a second video sequence depicting the scene;
tracking a foreground object in the second video sequence, the tracked foreground object being located in a first area of the plurality of areas in the scene in a first image frame of the second video sequence, and in a second different area of the plurality of areas in the scene in second image frame of the second video sequence;
determining a first set of colours of the tracked foreground object in the first image frame, and determining a second different set of colours of the tracked foreground object in the second image frame;
upon determining that the measurement of variability associated with the first area of the scene is lower than the measurement of variability associated with the second area of the scene, determining that the colour(s) of the tracked foreground object is the first set of colours, and otherwise determining that the colour(s) of the tracked foreground object is the second set of colours,
wherein the first and second video sequence is captured by a camera with a same field of view in the scene, wherein an area of the scene corresponds to a same pixel region in the image frames of the first and second video sequence,
or
wherein the first and second video sequence is captured by a camera with a changing field of view in the scene, and wherein a pixel region in an image frame from the first or the second video sequence that corresponds to an area of the scene is determined using camera parameters, the camera parameters comprising one or more of: pan, tilt, roll or zoom.

13. A data processing system comprising a colour matching system (404) and a forensic search application (402), wherein the colour matching system comprises:
one or more processors; and
one or more non-transitory computer-readable media storing first computer executable instructions that, when executed by the one or more processors, cause the system to perform actions comprising:
providing a first video sequence depicting a scene, the first video sequence comprising a plurality of image frames;
for each image frame of the plurality of image frames, detecting foreground objects in the image frame;
for each area of a plurality of areas in the scene, analysing the first video sequence and calculating an object colour probability vector associated with the area of the scene, wherein each value in the object colour probability vector relates to a colour from a set of predefined colours and indicates a probability that a foreground object located in the area of the scene has the colour;
for each area of the plurality of areas of the scene, calculating a measurement of variability of the probabilities indicated by the object colour probability vector associated with the area of the scene, an associating the measurement of variability with the area of the scene;
providing a second video sequence depicting the scene;
tracking a foreground object in the second video sequence, the tracked foreground object being located in a first area of the plurality of areas in the scene in a first image frame of the second video sequence, and in a second different area of the plurality of areas in the scene in second image frame of the second video sequence;
determining a first set of colours of the tracked foreground object in the first image frame, and determining a second different set of colours of the tracked foreground object in the second image frame;
upon determining that the measurement of variability associated with the first area of the scene is lower than the measurement of variability associated with the second area of the scene, determining that the colour(s) of the tracked foreground object is the first set of colours, and otherwise determining that the colour(s) of the tracked foreground object is the second set of colours;
receiving a search request comprising a first colour value;
determining that the first colour value matches a colour determined for the foreground object; and
returning a search response based at least in part on the foreground object; wherein the forensic search application comprises:
one or more processors; and
one or more non-transitory computer-readable media storing second computer executable instructions that, when executed by the one or more processors, cause the forensic search application to perform actions comprising:
providing the search request comprising the first colour value to the colour matching system;
receiving a search response from the colour matching system; and
displaying data from the search response to a user,
wherein the first and second video sequence is captured by a camera with a same field of view in the scene, wherein an area of the scene corresponds to a same pixel region in the image frames of the first and second video sequence,
or
wherein the first and second video sequence is captured by a camera with a changing field of view in the scene, and wherein a pixel region in an image frame from the first or the second video sequence that corresponds to an area of the scene is determined using camera parameters, the camera parameters comprising one or more of: pan, tilt, roll or zoom.

## Patentansprüche

1. Computerimplementiertes Verfahren (500) zum Bestimmen einer Farbe eines verfolgten Objekts, umfassend die Schritte von:
Anliefern (S502) einer ersten Videosequenz (204), die eine Szenerie (100) darstellt, wobei die erste Videosequenz eine Vielzahl von Bildframes umfasst;
für jeden Bildframe der Vielzahl von Bildframes, Detektieren (S504) von Vordergrundobjekten (206) in dem Bildframe;
für jedes Gebiet aus einer Vielzahl von Gebieten (102a-c) in der Szenerie, Analysieren der ersten Videosequenz und Berechnen (S506) eines Objektfarbenwahrscheinlichkeitsvektors (208a-c), der mit dem Gebiet der Szenerie assoziiert ist, wobei sich jeder Wert in dem Objektfarbenwahrscheinlichkeitsvektor auf eine Farbe aus einem Satz von vordefinierten Farben bezieht und eine Wahrscheinlichkeit angibt, dass ein sich in dem Gebiet der Szenerie befindliches Vordergrundobjekt diese Farbe aufweist;
für jedes Gebiet der Vielzahl von Gebieten der Szenerie, Berechnen (S508) einer Messung der Variabilität (210a-c) der Wahrscheinlichkeiten, angegeben durch den Objektfarbenwahrscheinlichkeitsvektor, assoziiert mit dem Gebiet der Szenerie, und Assoziieren der Messung von Variabilität mit dem Gebiet der Szenerie;
Anliefern (S510) einer zweiten Videosequenz (302), die die Szenerie darstellt;
Verfolgen (S512) eines Vordergrundobjekts (306) in der zweiten Videosequenz, hierbei befindet sich das verfolgte Vordergrundobjekt in einem ersten Gebiet der Vielzahl von Gebieten in der Szenerie in einem ersten Bildframe (304a) der zweiten Videosequenz, und in einem zweiten, unterschiedlichen Gebiet der Vielzahl von Gebieten in der Szenerie in einem zweiten Bildframe (304b) der zweiten Videosequenz;
Bestimmen (S514) eines ersten Satzes von Farben des verfolgten Vordergrundobjekts in dem ersten Bildframe; und Bestimmen (S514) eines zweiten, unterschiedlichen Satzes von Farben des verfolgten Vordergrundobjekts in dem zweiten Bildframe; und
auf Bestimmen, dass die Messung der Variabilität, assoziiert mit dem ersten Gebiet der Szenerie, niedriger ist als die Messung der Variabilität, assoziiert mit dem zweiten Gebiet der Szenerie, Bestimmen (S516), dass die Farbe(n) (310) des verfolgten Vordergrundobjekts der erste Satz von Farben ist, und ansonsten Bestimmen (S516), dass die Farbe(n) des verfolgten Vordergrundobjekts der zweite Satz von Farben ist,
wobei die erste und die zweite Videosequenz von einer Kamera mit einem selben Sichtfeld in der Szenerie aufgenommen werden, wobei ein Gebiet der Szenerie mit einer selben Pixelregion in den Bildframes der ersten und der zweiten Videosequenz korrespondiert,
oder
wobei die erste und die zweite Videosequenz von einer Kamera mit einem sich ändernden Sichtfeld in der Szenerie aufgenommen werden, wobei das Verfahren ferner den Schritt umfasst von:
Bestimmen einer Pixelregion in einem Bildframe aus der ersten oder der zweiten Videosequenz, die mit einem Gebiet der Szenerie korrespondiert, unter Verwendung von Kameraparametern, wobei die Kameraparameter einen oder mehrere der folgenden umfassen: Panorama, Kippen, Rollen oder Zoom.

2. Verfahren nach Anspruch 1, ferner umfassend die Schritte von:
Beschriften aller Auftretensfälle des verfolgten Vordergrundobjekts in der zweiten Videosequenz mit der bzw. den bestimmten Farbe(n).

3. Verfahren nach einem der Ansprüche 1-2, wobei jede aus dem ersten und dem zweiten Satz von Farben eines der Folgenden umfasst:
einen einzigen Farbwert;
eine Vielzahl von Farbwerten; oder
eine Vielzahl von Farbwerten, wobei jeder Farbwert mit einer Wahrscheinlichkeit assoziiert ist, dass das verfolgte Objekt diese Farbe aufweist.

4. Verfahren nach einem der Ansprüche 1-3, wobei jedes Gebiet der Szenerie mit einer einzigen Pixelkoordinate in den Bildframes der ersten und der zweiten Videosequenz korrespondiert.

5. Verfahren nach einem der Ansprüche 1-4, wobei der Schritt von Detektieren von Vordergrundobjekten in dem Bildframe Folgendes umfasst:
Bestimmen eines Ortes und eines Ausmaßes von jedem detektierten Vordergrundobjekt in dem Bildframe, wobei der Ort und das Ausmaß eines der folgenden umfasst:
eine Pixelmaske oder einen Umgrenzungskasten.

6. Verfahren nach einem der Ansprüche 1-5, wobei der Schritt von Analysieren der ersten Videosequenz, für jedes Vordergrundobjekt, das sich in dem Gebiet der Szenerie in einem Bildframe der ersten Videosequenz befindet, Folgendes umfasst:
Bestimmen einer oder mehrerer Farben des Vordergrundobjekts aus Pixeldaten, die das Vordergrundobjekt in dem Bildframe darstellen; und
Verwenden der einen oder der mehreren bestimmten Farben beim Berechnen des mit dem Gebiet der Szenerie assoziierten Objektfarbenwahrscheinlichkeitsvektors.

7. Verfahren nach einem der Ansprüche 1-5, wobei der Schritt von Analysieren der ersten Videosequenz, für jedes Vordergrundobjekt, das sich in dem Gebiet der Szenerie in einem Bildframe der ersten Videosequenz befindet, Folgendes umfasst:
Empfangen einer Vielzahl von Farbwerten, wobei jeder Farbwert mit einer Wahrscheinlichkeit assoziiert ist, dass das Vordergrundobjekt in diesem Bildframe diese Farbe aufweist; und
Verwenden der Vielzahl von Farbwerten und deren assoziierten Wahrscheinlichkeiten beim Berechnen des mit dem Gebiet der Szenerie assoziierten Objektfarbenwahrscheinlichkeitsvektors.

8. Verfahren nach einem der Ansprüche 1-7, wobei der Schritt des Berechnens eines Objektfarbenwahrscheinlichkeitsvektors für ein Gebiet der Vielzahl von Gebieten Detektieren mindestens einer Schwellenanzahl von Vordergrundobjekten in dem Gebiet der Szenerie umfasst.

9. Verfahren nach einem der Ansprüche 1-8, wobei die erste Videosequenz während eines ersten Zeitraums eines Tages aufgenommen wird, wobei die zweite Videosequenz während eines zweiten Zeitraums eines nachfolgenden Tages aufgenommen wird, wobei der zweite Zeitraum gänzlich innerhalb des ersten Zeitraums eingeschlossen ist.

10. Verfahren nach Anspruch 9, wobei die Messung der Variabilität mindestens eines der Folgenden ist:
Varianz, Standardabweichung, mittlere absolute Abweichung, mediane absolute Abweichung oder Koeffizient von Variationen.

11. Nicht-transitorisches, computerlesbares Speicherungsmedium, das Anweisungen umfasst, die, wenn sie durch einen Computer ausgeführt werden, den Computer zum Ausführen des Verfahrens der Ansprüche 1-10 veranlassen.

12. Datenverarbeitungssystem, umfassend:
einen oder mehrere Prozessoren; und
ein oder mehrere nicht-transitorische, computerlesbare Medien, die erste computerausführbare Anweisungen speichern, die bei Ausführung durch den einen oder die mehreren Prozessoren das System zum Durchführen von Handlungen veranlassen, die Folgendes umfassen:
Anliefern einer ersten Videosequenz, die eine Szenerie darstellt, wobei die erste Videosequenz eine Vielzahl von Bildframes umfasst;
für jeden Bildframe der Vielzahl von Bildframes, Detektieren von Vordergrundobjekten in dem Bildframe;
für jedes Gebiet aus einer Vielzahl von Gebieten in der Szenerie, Analysieren der ersten Videosequenz und Berechnen eines Objektfarbenwahrscheinlichkeitsvektors, der mit dem Gebiet der Szenerie assoziiert ist, wobei sich jeder Wert in dem Objektfarbenwahrscheinlichkeitsvektor auf eine Farbe aus einem Satz von vordefinierten Farben bezieht und eine Wahrscheinlichkeit angibt, dass ein sich in dem Gebiet der Szenerie befindliches Vordergrundobjekt diese Farbe aufweist;
für jedes Gebiet der Vielzahl von Gebieten der Szenerie, Berechnen einer Messung der Variabilität der Wahrscheinlichkeiten, angegeben durch den Objektfarbenwahrscheinlichkeitsvektor, assoziiert mit dem Gebiet der Szenerie, und Assoziieren der Messung der Variabilität mit dem Gebiet der Szenerie;
Anliefern einer zweiten Videosequenz, die die Szenerie darstellt;
Verfolgen eines Vordergrundobjekts in der zweiten Videosequenz, hierbei befindet sich das verfolgte Vordergrundobjekt in einem ersten Gebiet der Vielzahl von Gebieten in der Szenerie in einem ersten Bildframe der zweiten Videosequenz, und in einem zweiten, unterschiedlichen Gebiet der Vielzahl von Gebieten in der Szenerie in einem zweiten Bildframe der zweiten Videosequenz;
Bestimmen eines ersten Satzes von Farben des verfolgten Vordergrundobjekts in dem ersten Bildframe, und Bestimmen eines zweiten, unterschiedlichen Satzes von Farben des verfolgten Vordergrundobjekts in dem zweiten Bildframe;
auf Bestimmen, dass die Messung der Variabilität, assoziiert mit dem ersten Gebiet der Szenerie, niedriger ist als die Messung der Variabilität, assoziiert mit dem zweiten Gebiet der Szenerie, Bestimmen, dass die Farbe(n) des verfolgten Vordergrundobjekts der erste Satz von Farben ist, und ansonsten Bestimmen, dass die Farbe(n) des verfolgten Vordergrundobjekts der zweite Satz von Farben ist,
wobei die erste und die zweite Videosequenz von einer Kamera mit einem selben Sichtfeld in der Szenerie aufgenommen werden, wobei ein Gebiet der Szenerie mit einer selben Pixelregion in den Bildframes der ersten und der zweiten Videosequenz korrespondiert,
oder
wobei die erste und die zweite Videosequenz von einer Kamera mit einem sich ändernden Sichtfeld in der Szenerie aufgenommen werden, und wobei eine Pixelregion in einem Bildframe aus der ersten oder der zweiten Videosequenz, die mit einem Gebiet der Szenerie korrespondiert, unter Verwendung von Kameraparametern bestimmt wird, wobei die Kameraparameter einen oder mehrere der folgenden umfassen: Panorama, Kippen, Rollen oder Zoom.

13. Datenverarbeitungssystem, das ein Farbabgleichsystem (404) und eine Forensische-Suche-Anwendung (402) umfasst, wobei das Farbabgleichsystem Folgendes umfasst: einen oder mehrere Prozessoren; und ein oder mehrere nicht-transitorische, computerlesbare Medien, die erste computerausführbare Anweisungen speichern, die bei Ausführung durch den einen oder die mehreren Prozessoren das System zum Durchführen von Handlungen veranlassen, die Folgendes umfassen:
Anliefern einer ersten Videosequenz, die eine Szenerie darstellt, wobei die erste Videosequenz eine Vielzahl von Bildframes umfasst;
für jeden Bildframe der Vielzahl von Bildframes, Detektieren von Vordergrundobjekten in dem Bildframe; für jedes Gebiet aus einer Vielzahl von Gebieten in der Szenerie, Analysieren der ersten Videosequenz und Berechnen eines Objektfarbenwahrscheinlichkeitsvektors, der mit dem Gebiet der Szenerie assoziiert ist, wobei sich jeder Wert in dem Objektfarbenwahrscheinlichkeitsvektor auf eine Farbe aus einem Satz von vordefinierten Farben bezieht und eine Wahrscheinlichkeit angibt, dass ein sich in dem Gebiet der Szenerie befindliches Vordergrundobjekt diese Farbe aufweist;
für jedes Gebiet der Vielzahl von Gebieten der Szenerie, Berechnen einer Messung der Variabilität der Wahrscheinlichkeiten, angegeben durch den Objektfarbenwahrscheinlichkeitsvektor, assoziiert mit dem Gebiet der Szenerie, und Assoziieren der Messung der Variabilität mit dem Gebiet der Szenerie;
Anliefern einer zweiten Videosequenz, die die Szenerie darstellt;
Verfolgen eines Vordergrundobjekts in der zweiten Videosequenz, hierbei befindet sich das verfolgte Vordergrundobjekt in einem ersten Gebiet der Vielzahl von Gebieten in der Szenerie in einem ersten Bildframe der zweiten Videosequenz, und in einem zweiten, unterschiedlichen Gebiet der Vielzahl von Gebieten in der Szenerie in einem zweiten Bildframe der zweiten Videosequenz;
Bestimmen eines ersten Satzes von Farben des verfolgten Vordergrundobjekts in dem ersten Bildframe; und Bestimmen eines zweiten, unterschiedlichen Satzes von Farben des verfolgten Vordergrundobjekts in dem zweiten Bildframe;
auf Bestimmen, dass die Messung der Variabilität, assoziiert mit dem ersten Gebiet der Szenerie, niedriger ist als die Messung der Variabilität, assoziiert mit dem zweiten Gebiet der Szenerie, Bestimmen, dass die Farbe(n) des verfolgten Vordergrundobjekts der erste Satz von Farben ist, und ansonsten Bestimmen, dass die Farbe(n) des verfolgten Vordergrundobjekts der zweite Satz von Farben ist;
Empfangen einer Suchanfrage, die einen ersten Farbwert umfasst;
Bestimmen, dass der erste Farbwert mit einer Farbe übereinstimmt, die für das Vordergrundobjekt bestimmt wurde; und
Zurückgeben einer Suchantwort zumindest teilweise auf der Grundlage des Vordergrundobjekts; wobei die Forensische-Suche-Anwendung Folgendes umfasst:
einen oder mehrere Prozessoren; und
ein oder mehrere nicht-transitorische, computerlesbare Medien, die zweite computerausführbare Anweisungen speichern, die bei Ausführung durch den einen oder die mehreren Prozessoren die Forensische-Suche-Anwendung zum Durchführen von Handlungen veranlassen, die Folgendes umfassen:
Liefern der Suchanfrage, die den ersten Farbwert umfasst, an das Farbabgleichsystem;
Empfangen einer Suchantwort von dem Farbabgleichsystem; und Anzeigen von Daten aus der Suchantwort für einen Benutzer,
wobei die erste und die zweite Videosequenz von einer Kamera mit einem selben Sichtfeld in der Szenerie aufgenommen werden, wobei ein Gebiet der Szenerie mit einer selben Pixelregion in den Bildframes der ersten und der zweiten Videosequenz korrespondiert,
oder
wobei die erste und die zweite Videosequenz von einer Kamera mit einem sich ändernden Sichtfeld in der Szenerie aufgenommen werden, und wobei eine Pixelregion in einem Bildframe aus der ersten oder der zweiten Videosequenz, die mit einem Gebiet der Szenerie korrespondiert, unter Verwendung von Kameraparametern bestimmt wird, wobei die Kameraparameter einen oder mehrere der folgenden umfassen: Panorama, Kippen, Rollen oder Zoom.

## Revendications

1. Procédé (500) mis en œuvre par ordinateur pour déterminer une couleur d'un objet suivi, comprenant les étapes suivantes :
obtention (S502) d'une première séquence vidéo (204) représentant une scène (100), la première séquence vidéo comprenant une pluralité de trames d'image ;
pour chaque trame d'image de la pluralité de trames d'image, détection (S504) d'objets au premier plan (206) dans la trame d'image ;
pour chaque zone d'une pluralité de zones (102a-c) de la scène, analyse de la première séquence vidéo et calcul (S506) d'un vecteur de probabilité de couleur d'objet (208a-c) associé à la zone de la scène, chaque valeur du vecteur de probabilité de couleur d'objet se rapportant à une couleur d'un ensemble de couleurs prédéfinies et indiquant une probabilité pour qu'un objet au premier plan situé dans la zone de la scène ait la couleur ;
pour chaque zone de la pluralité de zones de la scène, calcul (S508) d'une mesure de variabilité (210a-c) des probabilités indiquées par le vecteur de probabilité de couleur d'objet associé à la zone de la scène, et association de la mesure de variabilité à la zone de la scène ;
obtention (S510) d'une deuxième séquence vidéo (302) représentant la scène ;
suivi (S512) d'un objet au premier plan (306) dans la deuxième séquence vidéo, l'objet au premier plan suivi se situant dans une première zone de la pluralité de zones de la scène dans une première trame d'image (304a) de la deuxième séquence vidéo, et dans une deuxième zone différente de la pluralité de zones de la scène dans une deuxième trame d'image (304b) de la deuxième séquence vidéo ;
détermination (S514) d'un premier ensemble de couleurs de l'objet au premier plan suivi dans la première trame d'image, et détermination (S514) d'un deuxième ensemble différent de couleurs de l'objet au premier plan suivi dans la deuxième trame d'image ; et
lors de la détermination que la mesure de variabilité associée à la première zone de la scène est inférieure à la mesure de variabilité associée à la deuxième zone de la scène, détermination (S516) que la/les couleur(s) (310) de l'objet au premier plan suivi est/sont le premier ensemble de couleurs, et sinon, détermination (S516) que la/les couleur(s) de l'objet au premier plan suivi est/sont le deuxième ensemble de couleurs,
dans lequel la première et la deuxième séquence vidéo sont capturées par une caméra avec un même champ de vision dans la scène, une zone de la scène correspondant à une même région de pixels dans les trames d'image de la première et la deuxième séquence vidéo,
ou
dans lequel la première et la deuxième séquence vidéo sont capturées par une caméra avec un champ de vision changeant dans la scène, le procédé comprenant en outre l'étape suivante :
détermination d'une région de pixels dans une trame d'image issue de la première ou la deuxième séquence vidéo qui correspond à une zone de la scène au moyen de paramètres de caméra, les paramètres de caméra en comprenant un ou plusieurs parmi le panoramique, l'inclinaison, le roulis et le zoom.

2. Procédé de la revendication 1, comprenant en outre les étapes suivantes :
marquage de toutes les occurrences de l'objet au premier plan suivi dans la deuxième séquence vidéo avec la/les couleur(s) déterminée(s).

3. Procédé de l'une quelconque des revendications 1 et 2, dans lequel chacun des premier et deuxième ensembles de couleurs comprend un élément parmi :
une seule valeur de couleur ;
une pluralité de valeurs de couleur ; ou
une pluralité de valeurs de couleur, chaque valeur de couleur étant associée à une probabilité pour que l'objet suivi ait la couleur.

4. Procédé de l'une quelconque des revendications 1 à 3, dans lequel chaque zone de la scène correspond à une seule coordonnée de pixel dans les trames d'image des première et deuxième séquences vidéo.

5. Procédé de l'une quelconque des revendications 1 à 4, dans lequel l'étape de détection d'objets au premier plan dans la trame d'image comprend :
la détermination d'un emplacement et d'une étendue de chaque objet au premier plan détecté dans la trame d'image, l'emplacement et l'étendue comprenant un élément parmi :
un masque de pixels, et une boîte englobante.

6. Procédé de l'une quelconque des revendications 1 à 5, dans lequel l'étape d'analyse de la première séquence vidéo comprend, pour chaque objet au premier plan situé dans la zone de la scène dans une trame d'image de la première séquence vidéo :
la détermination d'une ou plusieurs couleurs de l'objet au premier plan à partir de données de pixels représentant l'objet au premier plan dans la trame d'image ; et
l'utilisation de la ou des couleurs déterminées lors du calcul du vecteur de probabilité de couleur d'objet associé à la zone de la scène.

7. Procédé de l'une quelconque des revendications 1 à 5, dans lequel l'étape d'analyse de la première séquence vidéo comprend, pour chaque objet au premier plan situé dans la zone de la scène dans une trame d'image de la première séquence vidéo :
la réception d'une pluralité de valeurs de couleur, chaque valeur de couleur étant associée à une probabilité pour que l'objet au premier plan ait la couleur dans la trame d'image ; et
l'utilisation de la pluralité de valeurs de couleur et de leurs probabilités associées lors du calcul du vecteur de probabilité de couleur d'objet associé à la zone de la scène.

8. Procédé de l'une quelconque des revendications 1 à 7, dans lequel l'étape de calcul d'un vecteur de probabilité de couleur d'objet pour une zone de la pluralité de zones dans la scène comprend la détection d'au moins un nombre seuil d'objets au premier plan dans la zone de la scène.

9. Procédé de l'une quelconque des revendications 1 à 8, dans lequel la première séquence vidéo est capturée pendant une première tranche horaire d'un jour, dans lequel la deuxième séquence vidéo est capturée pendant une deuxième tranche horaire d'un jour suivant, dans lequel la deuxième tranche horaire est entièrement englobée dans la première tranche horaire.

10. Procédé de la revendication 9, dans lequel la mesure de variabilité en est au moins une parmi :
la variance, l'écart type, l'écart absolu moyen, l'écart absolu médian et le coefficient de variation.

11. Support de stockage non transitoire lisible par ordinateur comprenant des instructions qui, lors de leur exécution par un ordinateur, conduisent l'ordinateur à réaliser le procédé des revendications 1 à 10.

12. Système de traitement de données comprenant :
un ou plusieurs processeurs ; et
un ou plusieurs supports non transitoires lisibles par ordinateur stockant de premières instructions exécutables par ordinateur qui, lors de leur exécution par le ou les processeurs, conduisent le système à effectuer des actions comprenant :
l'obtention d'une première séquence vidéo représentant une scène, la première séquence vidéo comprenant une pluralité de trames d'image ;
pour chaque trame d'image de la pluralité de trames d'image, la détection d'objets au premier plan dans la trame d'image ;
pour chaque zone d'une pluralité de zones de la scène, l'analyse de la première séquence vidéo et le calcul d'un vecteur de probabilité de couleur d'objet associé à la zone de la scène, chaque valeur du vecteur de probabilité de couleur d'objet se rapportant à une couleur d'un ensemble de couleurs prédéfinies et indiquant une probabilité pour qu'un objet au premier plan situé dans la zone de la scène ait la couleur ;
pour chaque zone de la pluralité de zones de la scène, le calcul d'une mesure de variabilité des probabilités indiquées par le vecteur de probabilité de couleur d'objet associé à la zone de la scène, et l'association de la mesure de variabilité à la zone de la scène ;
l'obtention d'une deuxième séquence vidéo représentant la scène ;
le suivi d'un objet au premier plan dans la deuxième séquence vidéo, l'objet au premier plan suivi se situant dans une première zone de la pluralité de zones de la scène dans une première trame d'image de la deuxième séquence vidéo, et dans une deuxième zone différente de la pluralité de zones de la scène dans une deuxième trame d'image de la deuxième séquence vidéo ;
la détermination d'un premier ensemble de couleurs de l'objet au premier plan suivi dans la première trame d'image, et la détermination d'un deuxième ensemble différent de couleurs de l'objet au premier plan suivi dans la deuxième trame d'image ;
lors de la détermination que la mesure de variabilité associée à la première zone de la scène est inférieure à la mesure de variabilité associée à la deuxième zone de la scène, la détermination que la/les couleur(s) de l'objet au premier plan suivi est/sont le premier ensemble de couleurs, et sinon, la détermination que la/les couleur(s) de l'objet au premier plan suivi est/sont le deuxième ensemble de couleurs,
dans lequel la première et la deuxième séquence vidéo sont capturées par une caméra avec un même champ de vision dans la scène, une zone de la scène correspondant à une même région de pixels dans les trames d'image de la première et la deuxième séquence vidéo,
ou
dans lequel la première et la deuxième séquence vidéo sont capturées par une caméra avec un champ de vision changeant dans la scène, et dans lequel une région de pixels dans une trame d'image issue de la première ou la deuxième séquence vidéo qui correspond à une zone de la scène est déterminée au moyen de paramètres de caméra, les paramètres de caméra en comprenant un ou plusieurs parmi : le panoramique, l'inclinaison, le roulis et le zoom.

13. Système de traitement de données comprenant un système de mise en correspondance de couleurs (404) et une application de recherche contextuelle (402), dans lequel le système de mise en correspondance de couleurs comprend :
un ou plusieurs processeurs ; et
un ou plusieurs supports non transitoires lisibles par ordinateur stockant de premières instructions exécutables par ordinateur qui, lors de leur exécution par le ou les processeurs, conduisent le système à effectuer des actions comprenant :
l'obtention d'une première séquence vidéo représentant une scène, la première séquence vidéo comprenant une pluralité de trames d'image ;
pour chaque trame d'image de la pluralité de trames d'image, la détection d'objets au premier plan dans la trame d'image ;
pour chaque zone d'une pluralité de zones de la scène, l'analyse de la première séquence vidéo et le calcul d'un vecteur de probabilité de couleur d'objet associé à la zone de la scène, chaque valeur du vecteur de probabilité de couleur d'objet se rapportant à une couleur d'un ensemble de couleurs prédéfinies et indiquant une probabilité pour qu'un objet au premier plan situé dans la zone de la scène ait la couleur ;
pour chaque zone de la pluralité de zones de la scène, le calcul d'une mesure de variabilité des probabilités indiquées par le vecteur de probabilité de couleur d'objet associé à la zone de la scène, et l'association de la mesure de variabilité à la zone de la scène ;
l'obtention d'une deuxième séquence vidéo représentant la scène ;
le suivi d'un objet au premier plan dans la deuxième séquence vidéo, l'objet au premier plan suivi se situant dans une première zone de la pluralité de zones de la scène dans une première trame d'image de la deuxième séquence vidéo, et dans une deuxième zone différente de la pluralité de zones de la scène dans une deuxième trame d'image de la deuxième séquence vidéo ;
la détermination d'un premier ensemble de couleurs de l'objet au premier plan suivi dans la première trame d'image, et la détermination d'un deuxième ensemble différent de couleurs de l'objet au premier plan suivi dans la deuxième trame d'image ;
lors de la détermination que la mesure de variabilité associée à la première zone de la scène est inférieure à la mesure de variabilité associée à la deuxième zone de la scène, la détermination que la/les couleur(s) de l'objet au premier plan suivi est/sont le premier ensemble de couleurs, et sinon, la détermination que la/les couleur(s) de l'objet au premier plan suivi est/sont le deuxième ensemble de couleurs ;
la réception d'une requête de recherche comprenant une première valeur de couleur ;
la détermination que la première valeur de couleur correspond à une couleur déterminée pour l'objet au premier plan ; et
le renvoi d'une réponse à la recherche au moins en partie basée sur l'objet au premier plan ; dans lequel l'application de recherche contextuelle comprend :
un ou plusieurs processeurs ; et
un ou plusieurs supports non transitoires lisibles par ordinateur stockant de deuxièmes instructions exécutables par ordinateur qui, lors de leur exécution par le ou les processeurs, conduisent l'application de recherche contextuelle à effectuer des actions comprenant :
la fourniture de la requête de recherche comprenant la première valeur de couleur au système de mise en correspondance de couleurs ;
la réception d'une réponse à la recherche provenant du système de mise en correspondance de couleurs ; et
la présentation de données issues de la réponse à la recherche à un utilisateur,
dans lequel la première et la deuxième séquence vidéo sont capturées par une caméra avec un même champ de vision dans la scène, une zone de la scène correspondant à une même région de pixels dans les trames d'image de la première et la deuxième séquence vidéo,
ou
dans lequel la première et la deuxième séquence vidéo sont capturées par une caméra avec un champ de vision changeant dans la scène, et dans lequel une région de pixels dans une trame d'image issue de la première ou la deuxième séquence vidéo qui correspond à une zone de la scène est déterminée au moyen de paramètres de caméra, les paramètres de caméra en comprenant un ou plusieurs parmi le panoramique, l'inclinaison, le roulis et le zoom.
